# EUROPEAN PATENT APPLICATION

(11) **EP 4 592 979 A1**
(43) Date of publication of application: **30.07.2025**
(21) Application number: 25153866.6
(22) Date of filing: 24.01.2025
(51) Int. Cl.: G07F 9/02, G06Q 20/20, G07F 9/00, G07F 9/10, G07F 11/62, G07F 17/00, G07G 1/00

(54) **SELF-SERVICE DISPENSING DEVICE FOR DISPENSING PRODUCTS TAGGED WITH RFID CHIPS**

(30) Priority: 26.01.2024 CZ 20240030
(71) Applicant: HOPI CHEF TECH FOOD a.s., 43151 Klásterec nad Ohri Miretice u Klasterce nad (CZ)
(72) Inventor: VOSYKA, Michal, 10400 Praha 10 (CZ)
(74) Representative: Hak, Roman

(57) **Abstract**

A self-service dispensing device for dispensing products tagged with RFID chips comprises a dispensing device cabinet with an access element and one or more shelves for placing products tagged with RFID chips, a control unit and an electronically controlled lock of the access element of the cabinet, each shelf comprising one or more dispensing positions, each dispensing position being provided with at least one own RFID antenna, allowing for fast and user-friendly self-service purchase of products.

## Description

### Field of the Invention

The present invention relates generally to the field of product dispensing devices, more particularly to a self-service dispensing device for dispensing products tagged with RFID chips, particularly in a corporate or otherwise closed environment.

### Prior Art

Electronically controlled vending machines, for example in the form of a smart fridge for snacks, main meals and soups, are now widely used. A vending machine typically consists of a cabinet with one undivided space, or a space divided by horizontal shelves, on which products (e.g. meals, snacks, soups) to be dispensed are stored, as well as space for control electronics and controls, a device for gripping and moving food, a dispensing window, an alphanumeric keypad for product selection and a payment terminal.

Products are normally dispensed to the customer via a dispensing window, into which they are moved either by a combination of mechanical movement of a conveyor on the shelf and a mobile lift between shelves, or by droppingfrom a spiral feeder onto the shelf. Another option for dispensing is manual removal through unlocking the sliding door on the appropriate shelf, or a combination of opening the door and mechanically moving the product on the rotary feeder onto the shelf. The products are usually placed on the shelves vertically or with a slight inclination. The dispensing window - in the case of mechanical dispensing, is located either in the middle of the cabinet or at the bottom of the cabinet at a below-knee level. The dispensing windows on mechanically operated shelf doors are normally at all levels throughout the height of the machine, including the below-knee level. The material of the dispensing windows is predominantly plastic and they are lockable by electronic locks. The dispensing process is set up in such a way that no product other than the purchased one can be removed from the device area. Only the product pre-selected and paid for by the customer can be dispensed.

Vending machines are usually operated using an alphanumeric keypad or a touch screen. The dispensing of products is preceded by a thorough filling process that depends on human attention and thoroughness - precision must be observed when filling the vending machine; products must be placed only in the spaces specifically provided on the shelves. At the same time, the operator has to check that they are putting the correct kind or type of product into one position, which is often risky when large quantities of the same type of package are being inserted and can lead to product confusion at the dispensing position. Customers may therefore easily receive a different food after purchasing the selected food. Once the space is filled with products, it is typically necessary to manually enter the product count information into the device menu, and even with this manual process, errors can easily occur and products are either unsalable or sold at a wrong price.

The typical process of purchasing through a vending machine involves the customer visually selecting the product through a glass or transparent plastic part of the cabinet, or previewing the product through a touch screen, then reading the price below the shelf space or reading it on the screen, selecting it using a keyboard or tablet, placing the order and paying with a credit card or coins and notes.

The disadvantage of these vending machines is a long service time, during which the customer first selects, then chooses a product, then waits for the instruction of the payment terminal or coin machine, pays, waits for confirmation of payment and then waits for the processing of the order by the vending machine, which feeds the product or unlocks the appropriate compartment in the shelf for product collection. Another disadvantage is a high degree of mechanisation (elevator, robot), which requires regular maintenance (mechanical movements) and which entails a certain degree of risk of damage to the product by mechanical dropping into or under the dispensing area, which may subsequently block the entire machine. Vending machines with a dispensing window at the bottom, i.e. at a below-knee level, although designed to be large capacity, are nevertheless highly non-ergonomic from an ergonomic point of view. Picking food from a below knee-level forces customers to bend over, and may not be possible, for example, for people with physical disabilities or other physical disorders.

The existing vending machines have an industrial, cold look and it is not possible to apply design solutions to them other than, for example, an advertisement of the vending machine operator. They are usually designed for a wide range of locations, both private and public spaces. For some users, this may convey more of a sense of a machine than a consumer device, for example for corporate catering.

An advanced variant of vending machines are food dispensers in the form of so-called "smart fridges". These are considerably simpler mechanically, but also in terms of process, and can be very well designed compared to standard vending machines. They are also technologically on a higher level, as they do not directly use human intervention to process information about the food inserted and dispensed, but obtain the information through automatic reading of information by an antenna from digital, passive chips located most often on the product (food) packaging. Passive in this context means that the chip does not use any power source such as a battery or accumulator, but the information in the chip is excited and transmitted wirelessly by an antenna in the vicinity of such a chip. Mechanically, then, such a smart refrigerator uses virtually no mechanized equipment, except for a compressor to cool the food compartment. The smart refrigerator consists of a refrigerated cabinet with a swing door, control electronics, usually a small touch screen monitor, a door lock, and graphic or other material panelling.

The essence of the technical solution of smart fridges lies in a simplified purchasing process, during which the customer (as with a vending machine) chooses food by looking into the glass or transparent part of the refrigerated cabinet with food, then can view the details of the food on the tablet display and after authorization by mobile phone or payment card, lock of the refrigerator door is unlocked and the customer is allowed to remove any food or product from the refrigerator space. Closing the refrigerator door locks the door lock, wirelessly detects a change in the stock in the refrigerator compartment, the recalculated changes are reflected as a purchase receipt on the tablet display where the client can check their purchase against the physical goods removed and the purchase process ends with a charge to the payment card.

The disadvantages of the solutions currently available on the market are their several limitations. The first limitation is the reduced ability to wirelessly transmit information about food when the refrigerated space is more crowded with products; the wireless information from the chip on the food simply cannot be read because the signal from the chip is obscured by other food or the water content of the food in the package or box. The second major drawback is that during the purchase process, a certain amount is charged to the customer's credit card after the credit card is attached for authorization, which serves as a deposit for the purchase, and also allows only customers with sufficient funds on hand to hold a deposit for the purchase to open the door. After a certain period of time, the purchase deposit is refunded to the card again. A third disadvantage of the current solutions is that (for the reasons described above) only a small number of meals can be in the refrigerated cabinet at any given time; thus, the operation of the refrigerator is highly uneconomical. A fourth disadvantage is that card purchases do not allow the customer to be recognised or registered to the extent that they can be handled in any way; customer data is not transferred when a card purchase is made. It is therefore not possible to accompany the customer in any marketing way, e.g. in a mobile application. In practice, these devices are mainly used for supplementary sales and are mainly visible and located in public areas where they resemble a traditional vending machine in their appearance.

Despite the existence of a wide range of vending machines, there is a need for a device that can serve customers quickly and in a user-friendly manner, while also allowing for easy maintenance and quick replenishment of products.

### Summary of the Invention

The subject-matter of the invention is a self-service dispensing device for dispensing products tagged with RFID chips, comprising a dispensing device cabinet with an access element and one or more shelves for placing products tagged with RFID chips, a control unit and an electronically controlled lock of the access element of the cabinet, wherein each shelf comprises one or more dispensing positions, each of the dispensing positions being provided with at least one own RFID antenna.

The dispensing device according to the present invention can be used for sale of any products. It is suitable, for example, for the dispensing of meals in the context of company catering, but other products, such as cosmetic or toiletry products, and also paper products, etc., can also be dispensed in this way. The condition for its operation is that the products (or their packaging) are tagged with an RFID (Radio Frequency Identification) chip, i.e. a chip that allows almost any object to be wirelessly identified using data transmitted via radio waves, from which the information can then be read and rewritten. The term self-service means that the customer operates the dispensing device himself, without the need to communicate with third parties.

The self-service dispensing device according to the present invention is intended primarily for closed groups, e.g. to provide corporate catering in the form of self-service take-out, for schools and the like, since it is desirable that a specific customer making a selection of products from the device is identified in the context of the use of the device. However, the equipment can be used under other conditions, i.e. in public.

The dispensing device primarily comprises a dispensing device cabinet that defines the area where the products tagged with RFID chips are placed. The cabinet may be of virtually any shape. In terms of positioning in the space and ease of use by customers, it will typically be in the shape of a block built on one of its smaller sides, fitted with an access element (door) with a handle with a lock. However, it can also be a design shape, such as an egg shape, or any other shape. The cabinet can be made of any material, for example plastic or metal (for example aluminium profiles), or a combination of several materials. The cabinet (its casing) may also be covered with, for example, promotional material or instructions for use of the device, or information about the products offered in the device.

In one preferred embodiment, the dispensing device cabinet is a refrigerated cabinet. In this embodiment, the dispensing device is suitable for, for example, corporate catering where the products tagged with RFID chips are food products, typically fresh snacks, main meals and soups.

Advantageously, the entire cabinet construction is placed on a frame (typically metal) equipped with castors (for easy moving the cabinet into place) and screw-on feet for positioning and securing the entire assembly against movement on site. However, various variants are possible, for example a purely mobile device, but also a purely stationary device, possibly also integrated into other elements.

The cabinet includes one or more shelves for placing products tagged with RFID chips. Typically, the shelves will be placed vertically one above another, the number of shelves depending on the size of the cabinet as well as the size of the products to be placed in the cabinet. Typically, the number of shelves will be around six. The cabinet may have a modular shelving system that will allow the number of shelves to be changed depending on changing requirements. This modularity can be provided, for example, by placing a series of grooves in the side walls of the cabinet into which the shelves can be inserted. Alternatively, other shelf positions are possible, for example horizontally.

Individual shelves can contain one or more dispensing positions. Each dispensing position is usually designed to accommodate several products, usually (but not necessarily) of the same type, but it is also possible to accommodate a single product in a dispensing position. The dispensing position may, of course, also remain unoccupied during the operation of the device. The dispensing positions may be separated within a single shelf by, for example, partitions, or the dispensing positions within the shelves may be formed by trays for storing individual products or by feeders for dispensing products.

Consequently, the device comprises a plurality of dispensing positions, usually in a plurality of shelves. Each of these dispensing positions is then equipped with at least one RFID antenna, which reads RFID chips of products placed in the respective position.

RFID antennas can either be installed outside the shelves or partitions (above, below, or on the side), or they can be integrated into the shelves, positions or partitions. Preferably, they are integrated into shelves, partitions or dispensing positions (trays, feeders), as in this case there is significantly less risk of damage to the antennas during product handling. Preferably they are positioned so as to have easy access to the RFID chip of the product, i.e. preferably above or next to the product, for example in the form of ready meals where the water content cannot partially hinder or complicate the reading of the RFID chip.

The RFID antennas can consist of commercially available RFID antennas, or flexible RFID antennas, which are routed as needed to provide the best possible coverage of the shelf and each individual dispensing position with the radio frequency signal - linearly, or also non-linearly.

High capacity utilization of the device and maximum product fill is achieved by using shelves with individual feeders (positions) on each shelf and individually embedded RFID antennas located on/at each shelf in such numbers that each dispensing position is covered by at least one RFID antenna of its own, which ensures that each product tagged with RFID chip will be clearly visible and identifiable to the device, which was not possible with existing vending machines and smart refrigerators due to shadowing of products by other products. In some cases, such as larger dispensing positions, it may even be desirable to use multiple RFID antennas to detect products within a single dispensing position. The products can thus be evenly distributed on the shelves in several rows, always with a minimum of 10 pieces in a row and typically three or four rows (dispensing positions) side by side. However, other arrangements with a different number of dispensing positions (even five or more, depending on the specific type and especially the dimensions of the product to be placed) are also possible.

The antennas above or between rows (positions) allow the RFID chips placed on the products to be sensed individually in a given position, thus maximizing the use of the capacity and technological possibilities of the individual UHF RFID antennas in the cabinet. The benefit of this antenna placement is the precise location of products (or food) in the cabinet and furthermore the enhanced customer experience when searching, filtering or removing multiple products from the fridge at the same time.

The RFID antennas are routed from the inside of the cabinet through openings to the outside. If the cabinet is a refrigerated cabinet and the device functions as a refrigerator, the openings shall be watertight and as small and well insulated as possible.

The cabinet shall include at least one access element. The access element shall be lockable by an electronically operable lock. The lock itself may be either of the electronic type or of the mechanical type, but shall be electronically operable by instruction from the control unit.

The access element is typically a door, and the device may have one or more doors. The doors are typically shaped to correspond to the front of the cabinet or part of the cabinet intended for dispensing products. They may be openable in either direction. Typically, they will have one leaf and be pivotable to the side, similar to, for example, a conventional or smart refrigerator. However, they can also be double leaf, sliding or tilting up or down.

Alternatively, the access element can be a drawer or box that can be slid out of the cabinet space. There may be multiple drawers or boxes, wherein each drawer may comprise one or more shelves with one or more dispensing positions.

Unlike most current solutions, the access element can be opaque, but can also be transparent, such as glass, to enhance the consumer experience. In one preferred embodiment, the access element is transparent (glass) and comprises a layer limiting the penetration of the radio field, such as metalized glass or metalized film.

The dispensing device further comprises a control unit. This is responsible for controlling all the functions of the device, customer authorization, checking and, if necessary, displaying the stock status, and settling transactions. Basically, it is a computer comprising at least a processor, a memory module and data storage. Typically, the control unit is located on the side or rear of the device cabinet.

The control unit must be able to authorise the relevant customer or operator. This is possible for example by direct communication with the mobile device (phone or tablet) of the customer or operator, for example via Bluetooth or other wireless communication protocol.

In a preferred embodiment, the control device is also connected to a reader for customer authorization. The reader can be placed directly on the device (preferably on the side or on the door of the cabinet), but it can also be placed outside the cabinet itself, for example on an external stand.

The reader is a universal authorization element adapted to retrieve information from a wide range of interfaces, for example, traditional plastic access cards on different frequencies of the LF and HF bands, "Wallet pass" (identifier in the wallet of a mobile phone or tablet), as well as using a custom access application for mobile phones and tablets, interacting with a simple touch screen interface (e.g. QR code displayed on the tablet screen), smart watches and wristbands, or Face ID or fingerprint technology.)

The exact form of the reader will depend on the type of access cards and other authorization options that will be used in the process. Commonly used readers (e.g. smart card readers) can be used, or an application-specific reader can be created. The reader is advantageously adapted so that modification of its functions, or security updates are controlled by firmware (software tool) and not by hardware (physical components). Thus, when changing or modifying security rules, it is sufficient to remotely download the firmware to the reader and there is no need for complicated replacement of the reader's fixed structural parts on the device.

The control unit also controls a controller or a similar device that communicates with the RFID antennas and provides the control unit with information about the number and position of individual products in the device. The communication takes place at the direction of the control unit, usually when the customer is authorized, i.e. when the purchase is initiated, and then when the purchase is completed when the door is closed. By comparing the two pieces of information, the control unit determines what changes have occurred in the contents of the cabinet and accordingly performs the appropriate transaction, for example, deducting the amount of the purchased products from the customer's account.

The controller can be integrated within the printed circuit directly in the control unit, or it can be a separate element of the control unit, located, for example, in the rear of the cabinet. Under standard conditions, one separate controller is sufficient for about 20 RFID antennas. However, the number of controllers and the ratio of controllers to antennas can be adjusted if necessary.

Furthermore, the control device is connected to an electronically operated lock, whereby after customer identification (typically via a reader), it ensures the opening of the electronic or mechanical lock of the access element (door) and access to the internal space of the dispensing cabinet. Once the transaction is complete, the control unit again locks the access element (door) to prevent further products from being removed without authorisation.

In addition to the reader and the lock, the control device can also control other components of the dispensing device - for example, lights in the cabinet (fridge), sensors (temperature, humidity, vibration), security camera. It processes all the data and can transmit some of it to cloud storage.

In a preferred embodiment, the device also includes a touch screen display for communication with the customer. This may be a commercially available Android or iOS tablet, for example, with a diagonal size of 9" to 20". However, other solutions are of course also possible, depending on the specific layout of the device.

The touch screen display may be fixed into the device casing or may be on a separate stand next to the device (for example, on a common stand with the reader), and connected to the device either by wires or wireless technology.

The touch screen display performs three main functions - the first is marketing communication through videos and images on the display when there is no direct interaction with the user, the second is to guide the user through the entire purchase process, including displaying the entire transaction, and the third is to display the menu of products currently in the device, including, for example, detailed descriptions of ingredients, preparation instructions, nutritional values of the meals and display of allergen filters when the device is used as a smart fridge.

Product localization can be furthermore advantageously accompanied by a visual element of LED strip placed in front of each row (position) of products on the shelf so that the user can see and know exactly where the desired product is located in the cabinet space before collection or during collection.

The dispensing device according to the present invention may also comprise a number of other components that further streamline or make more convenient the entire process of product selection and transaction settlement, or subsequent transaction control. A basic variation is to illuminate the entire area of the facility, wherein the standard lighting may be of a lower intensity, and the lighting may be intensified when the door is unlocked to make the selection more convenient. In addition, the device may be equipped with, for example, a camera that captures the area where the product is being collected, so that in the event of any non-standard selection or transaction outcome, it is possible to check exactly what has occurred. As a result of identifying the customer at a given time, any non-standard transaction can then be linked to a specific customer (or operator) of the facility. Additionally, it is possible to add detectors and sensors that oversee the proper operation of the device, especially if the device is a refrigerated food dispensing facility. These include, for example, temperature sensors, humidity sensors, or vibration sensors.

The economical operation of the device is achieved by intelligent control of the control elements. These are in "stand-by" mode (power saving mode) when there is no interaction with the user, or completely switched off without power. Power is restored to all control elements when user interaction is detected by logging in via the reader or other means (mobile device) communicating with the control unit.

The entire device also advantageously comprises a backup power supply that allows the ongoing transaction to be completed in emergency mode in the event of a power failure. The backup power supply is sufficient with a relatively limited capacity, since its objective is not to keep the entire device operational for an extended period of time, but only to provide sufficient capacity to complete a single transaction, i.e. in particular to operate the control unit for a few seconds, or minutes at most.

Thus, the entire transaction via the dispensing device according to the present invention proceeds as follows:
The customer is identified through his mobile device (communicating with the control unit) or by placing their card or other device to the authorisation element, typically a reader. The control unit checks the identity of the customer and, if the customer has the rights to take products from the facility, the control unit instructs to unlock the electronically controlled lock of the access element (door or drawer) of the device. At the same time, it instructs the controller to check the initial stock of products in the device by communicating with the RFID antennas.

After unlocking the door of the facility, the customer selects one or more products of their choice. They can also change their mind about purchasing products and not choose any product, or choose but return the product to the shelf before completing the purchase. The selection is made by physically removing a particular product from the shelf; no selection needs to be made on other devices. The purchase is completed by closing the door.

When the door is closed, the control device again initiates a check of the status of the contents of the device via communication between the controller and the RFID antennas, from which the final inventory status of the products from the device is entered into the control device. The control device then compares the final state with the initial state and settles the transaction accordingly. If the device is equipped with a touch screen display or other communication device, the transaction is displayed on such device. At the same time, the payment is debited either by deduction from the payroll or from the card or by charging the selected payment method in the application. At the same time, the electronically controlled lock is locked, preventing access by an unauthorized user.

The entire purchase of goods in the device according to the present invention takes only a few seconds, at most (especially in case of customer indecision or purchase of a larger number of products) tens of seconds.

Replenishment is similarly fast:
The replenisher is authenticated via their own mobile device or reader and personal card or application, the control unit unlocks the lock of the access element (door) and detects the initial stock status via communication between the controller and the antennas. Once the products have been replenished and the door has been closed, it performs another check, this time of the final stock level, while also recording where each product is within the device. This eliminates the need to manually enter individual products into the system; all data is read from the RFID chips automatically. Nor is the price of the products to be recorded manually in any way. It is sufficient to enter the price information of the product tagged with a particular RFID chip remotely into the control unit.

### Clarification of Drawings

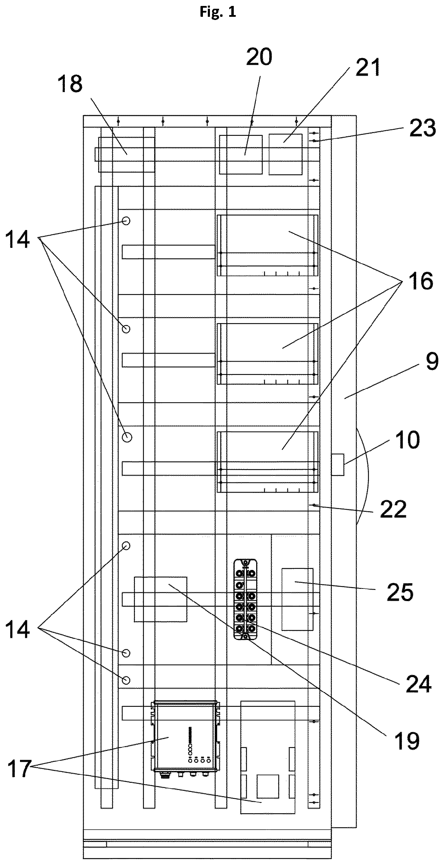

The invention is explained by means of schematic drawings, wherein
Fig. 1 schematically shows the basic layout of the technical elements of the device as viewed from the side,

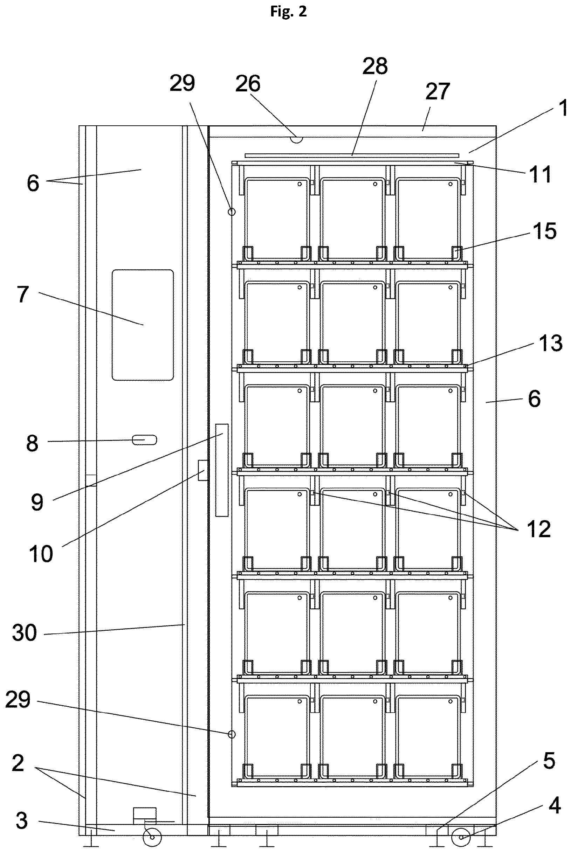

Fig. 2 shows a front view of the device from the user's perspective,

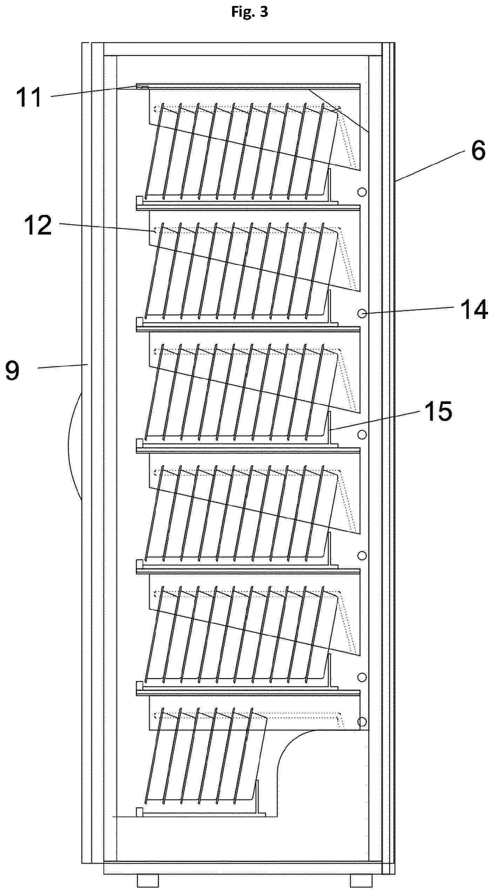

Fig. 3 presents a schematic side section and view of the location of the shelves with the dispensing positions and RFID antennas.

### Examples of Embodiments of the Invention

It is understood that the example embodiments described below are for illustrative purposes only and are not intended to limit the invention to such examples. A person skilled in the art will, of course, be able to prepare equivalents to the specific embodiments of the invention described herein with the aid of routine experimentation. These equivalents are also included within the scope of the patent claims.

### Example 1

A self-service dispensing device designed for selling sweets (tagged with RFID chips on their packaging) comprises a cabinet 1 which is directly placed on the floor. A casing 6 of the cabinet 1 protects key components from external interference, and is used to accommodate a control touch screen display 7 and an access reader 8 within the device. The electronically operated lock 10 is located on the access element 9, the access element 9 being the door. The shelves 11 with RFID antennas 12 are located inside the device in the guide grooves for the shelves 11, wherein the antennas 12 are routed out of the interior space of the cabinet 1 through openings 14 outside the interior space of the cabinet 1. The product dispensing positions 15 (the positions are in the form of trays) are located on the shelves 11 inside the interior space of the cabinet 1. The control electronics 16 of the antennas 12, the power supplies 17, the control unit 19, the wireless router 20, the sensor 22 of the opening of the service compartment, the control 25 of the lock 10 and the lock 10 are hidden under the side panel of the casing 6; the touch screen display 7 and the access reader 8 are located under the front side of the casing 6; the camera 26 for recording purchases is located under the top panel 27; the shelves 11 with integrated RFID antennas 12, the LED lights 13 of the dispensing position 15, the ambient lighting LED lights 28 and the dispensing positions (trays) 15 of the products are integrated into the interior of the cabinet 1, which is covered by the side part of the casing 6. Further, an LED strip 30 is integrated in the front part of the casing 6 to communicate the status of the device towards the user.

### Example 2

A self-service dispensing device in the form of a smart refrigerator (for dispensing pre-prepared food or meals tagged with RFID chips on its packaging) comprises a refrigerated cabinet 1 of the device, which is seated and bolted to an independent two-piece frame 2, to its bottom 3 with castors 4 and screw-on feet 5 for positioning and securing the entire assembly against movement at the point of operation. The second part of the frame 2 is perpendicular to the bottom part 3 and rests against the wall of the refrigerated cabinet 1 of the device. It also serves to secure the refrigeration cabinet 1 of the device against movement outside the frame 2 and to accommodate the control elements of the device. The frame 2, together with the cabinet 1, is externally sheathed with a casing 6. The casing 6 protects the key components from external interference and is used to accommodate the control touch screen display 7 and the reader 8 in the device. An electronically operated lock 10 is located on the access element 9 of the device (door) and is locked outside the body of the device to avoid violating the declaration of conformity of the refrigerated device. The shelves 11 with RFID antennas 12 and LED lights 13 of the dispensing positions 15 are located inside the cabinet 1 of the device in the guide grooves for the shelves 11, the RFID antennas 12 and LED lights 13 being routed out of the interior space of the cabinet 1 of the device through watertight openings 14 outside the space of the cabinet 1 of the device. Food dispensing positions 15 (in the form of trays) are provided on the shelves 11 inside the refrigerated compartment of the device cabinet 1. The controllers 16 of the antennas 12, the power supplies 17, the control electronics 18 of the LED strips, the control unit 19, the wireless router 20 for connection to the internet and the control electronics 21 of the camera 26, the sensor 22 of the opening of the service compartment, the vibration sensor 23, the control module 24 of the sensors, the control 25 of the lock 10 and the lock 10 are hidden under the side panel of the casing 6; the touch screen tablet 7, the access reader 8 are located under the front panel of the casing 6 so as to be accessible to the customer and the operator; a camera 26 for recording purchases is located under the top panel 27; shelves 11 with integrated RFID antennas 12, LED lights 13 of the dispensing position 15, lighting 28 of the cabinet 1 of the device, the dispensing position 15 for products tagged with RFID chips and temperature and humidity sensors 29 are integrated into the interior of the cabinet 1 of the device, which is covered by the side wall of the casing 6. Furthermore, an LED strip 30 is integrated in the front wall of the casing 6 to communicate the status of the device towards the user.

Meals in recyclable plastic boxes with integrated RFID chips are placed in the refrigerated cabinet 1 of the device by the operator of the replenishment after authorization on the reader 8, whereby to replenish the meals in the cabinet 1 of the device, the replenisher unlocks the lock 10 of the access element (door) 9 of the cabinet 1 and the replenisher places the meals on the shelves 11 in the meal trays (dispensing positions) 15 so that the meals are always displayed as close as possible to the customer. Once the meals are inserted, the RFID antennas 12 automatically detect where the meals are in the cabinet 1 of the device and the meals and the number of meals in the refrigerated cabinet 1 of the device are automatically displayed on the touch screen display 7 user interface. By closing the access element 9 of the device cabinet 1, the replenishment mode is completed and the lock 10 locks the access element 9 of the device cabinet 1 and automatically switches the device to the shopping mode.

Customer login to the smart fridge is done using the reader 8 with multiple login options; namely, using a plastic employee card, a digital card called "Wallet pass" in a mobile device, or using a custom application for the device with a QR code read on the main page of the touch screen display 7. After authorization of the user by the reader 8 in communication with the control unit 19, the electronically operated lock 10 releases the access element (door) 9 of the refrigerated cabinet 1 of the device on the instruction of the control unit 19 and the customer can select any product to be purchased after opening the access element (door) 9, remove it from the shelf 11 and, without having to perform any other action, can close the access element 9 of the refrigerated cabinet 1 of the device, thus completing the purchase; a summary of the purchase is displayed to them on the touch screen display 7 of the tablet and a charge is made either by deduction from their wages or by deduction from their chosen payment method in the application. The customer does not need to perform any operations associated with the food selection other than physically removing the food from the refrigerated cabinet 1 of the device, which was unlocked in the previous step after logging in via the reader 8.

The controllers 16 continuously process information about all read products tagged with RFID chips and transmit the read information to the control unit 19. On the basis of the information about the reading of the RFID chips (at a certain time), an overview of the inventory is maintained. At the moment of removing or adding food, the control unit 19 knows about it with minimal consumption through the information about the chips read from the controllers 16. All this data is synchronized in real time to the cloud, where it is enriched with additional information on the server, so that it can then be read from the cloud by the application displaying the stock and the progress of the order on the touch screen 7. This web application is displayed on the device using the touch screen display 7, and through it the customer interacts with the instructions.

In addition to authorization (via the reader 8) and transaction settlement, the control unit 19 controls other components, such as the electronically controlled lock 10, LED lights 13 at the dispensing positions 15, sensors 29 for temperature, humidity, vibration sensor 23, security camera 26 and its control electronics 21. It processes all the data and forwards some of it to the cloud.

### Industrial Applicability

The present invention is mainly applicable for corporate catering, instead of the traditional concept of a canteen with its own kitchen and cooking technology. It serves for business communication between the company and employees without the need for external service for the dispensing of main meals, soups and snacks intended for company catering and the improvement of the working environment, so-called "wellbeing".

The present invention eliminates the disadvantages of current smart refrigerators, overcomes their single-purpose, outdated design, makes modern technology available for user authorization, improves the user experience when interacting with the device display and with the contents of the refrigerated compartment containing food, overcomes the current limitation of not utilizing the high capacity of the refrigerator compartment, and thus improves the economy of refrigerator operation. Furthermore, it allows for cheaper food production and operation of the entire smart refrigerator solution. It creates an easy to use, easy to modify, autonomous, easy to repair, technologically advanced, manufacturable and cost competitive smart fridge that will fully substitute and replace the traditional way of corporate catering with its simplicity, appearance and functionalities. It also allows for very quick, simple and convenient purchasing of products, as well as very quick, simple and convenient replenishment of products into the device, which does not require time-consuming entry of individual products into the system.

At the same time, the present invention may also be useful for dispensing other products (cosmetic, paper), again primarily in a corporate or otherwise closed environment.

### List of reference numerals

- 1: cabinet of the device
- 2: frame
- 3: bottom of the frame
- 4: castors
- 5: screw-on feet
- 6: casing
- 7: touch screen display
- 8: reader
- 9: access element (door)
- 10: lock
- 11: shelf
- 12: RFID antennas
- 13: LED position lights of the dispensing position
- 14: openings for antennas and LED strips
- 15: dispensing positions (trays, feeders)
- 16: controller (antenna control electronics)
- 17: power supplies
- 18: LED strip control electronics
- 19: control unit
- 20: wireless router for internet connection
- 21: camera control electronics
- 22: service compartment opening sensor
- 23: vibration sensor
- 24: sensor control module
- 25: lock control
- 26: camera for recording purchases
- 27: top panel
- 28: cabinet lighting equipment
- 29: temperature and humidity sensors
- 30: LED strip to communicate device status

## Claims

1. A self-service dispensing device for dispensing products tagged with RFID chips, comprising a dispensing device cabinet (1) with an access element (9) and one or more shelves (11) for placing products tagged with RFID chips, a control unit (19) and an electronically controlled lock (10) of the access element (9) of the cabinet (1), **characterized in that** each shelf (11) comprises one or more dispensing positions (15), each of the dispensing positions (15) being provided with at least one own RFID antenna (12).

2. The self-service dispensing device for dispensing products tagged with RFID chips according to claim 1, **characterized in that** it further comprises a reader (8) for identifying the customer.

3. The self-service dispensing device for dispensing products tagged with RFID chips according to claim 1 or 2, **characterized in that** the cabinet (1) of the dispensing device is a refrigerated cabinet.

4. The self-service dispensing device for dispensing products tagged with RFID chips according to any one of the preceding claims, **characterized in that** the cabinet (1) is mounted on a frame (2) provided with castors (4) and screw-on feet (5).

5. The self-service dispensing device for dispensing products tagged with RFID chips according to any one of the preceding claims, **characterized in that** it further comprises a touch screen display (7) for communicating with the customer.

6. The self-service dispensing device for dispensing products tagged with RFID chips according to any one of the preceding claims, **characterized in that** the RFID antennas (12) are integrated into the shelves (11) or dispensing positions (15).

7. The self-service dispensing device for dispensing products tagged with RFID chips according to any one of the preceding claims, **characterized in that** each of the dispensing positions (15) on the shelf (11) is further provided with a LED position light (13).

8. The self-service dispensing device for dispensing products tagged with RFID chips according to any one of the preceding claims, **characterized in that** the access element (9) is transparent and comprises a layer limiting the penetration of the radio field.

9. The self-service dispensing device for dispensing products tagged with RFID chips according to any one of the preceding claims, **characterized in that** it further comprises a backup power supply (17) for the control unit (19).
